# FASCICULE DE BREVET EUROPEEN

(11) **EP 3 767 086 B1**
(45) Date de publication et mention de la délivrance du brevet: **30.08.2023**
(21) Numéro de dépôt: 20183393.6
(22) Date de dépôt: 01.07.2020
(51) Int. Cl.: F01N 3/28, F01N 13/00, G01N 33/00

(54) **CAPTEUR DE MESURE DE PROPRIÉTÉS DE GAZ**
SENSOR ZUM MESSEN VON GASEIGENSCHAFTEN
SENSOR FOR MEASURING GAS PROPERTIES

(30) Priorité: 16.07.2019 FR 1908029
(43) Date de publication de la demande: 20.01.2021
(73) Titulaire: Renault s.a.s, 92100 Boulogne Billancourt (FR)
(72) Inventeur: PRUSKI, STANISLAS, 78360 Montesson (FR); ZHANG, Weiran, 92800 Puteaux (FR)
(74) Mandataire: Renault Group

(56) Documents cités:
- WO-A1-2019/245956
- DE-A1-102010 028 631
- DE-A1-102017 006 596
- FR-A1- 3 067 396
- US-A1- 2005 160 840
- US-A1- 2015 160 102
- US-A1- 2016 349 227

## Description

L'invention concerne un capteur de mesure de propriétés de gaz. L'invention porte aussi sur une conduite de gaz comprenant un tel capteur et un moteur à combustion interne comprenant une telle conduite et/ou un tel capteur. L'invention porte encore sur un véhicule automobile comprenant un tel moteur à combustion interne, une telle conduite ou un tel capteur.

La réglementation de la dépollution des moteurs à combustion interne, notamment des moteurs diesel, devenant de plus en plus stricte, on a couramment recours à l'utilisation d'un capteur, ou sonde, de mesure, par exemple un capteur d'oxydes d'azotes (NOₓ), placé dans le circuit d'échappement du moteur à combustion interne pour détecter la concentration d'un composé toxique, par exemple les oxydes d'azote, dans les gaz de combustion à la sortie du moteur.

Un tel capteur peut être disposé dans un circuit d'échappement, par exemple, plus particulièrement dans le cas d'un capteur d'oxydes d'azote, en amont d'un catalyseur de réduction sélective des oxydes d'azote, couramment désigné par l'acronyme d'origine anglo-saxonne SCR pour « Sélective Catalytic Réduction ». Un tel capteur est notamment destiné à calculer une quantité de réducteurs à base d'urée (Adblue^{®}), précurseur de l'ammoniac, à injecter dans le catalyseur SCR pour transformer par réduction les oxydes d'azote (NOₓ) en molécules inoffensives de diazote (N₂) et d'eau (H₂O) et à maintenir au sein du catalyseur SCR un stock tampon d'ammoniac permettant une bonne efficacité de la réaction de réduction.

Un tel capteur peut aussi être monté dans un circuit d'échappement, plus particulièrement aussi dans le cas d'un capteur d'oxydes d'azote, en aval d'un piège à oxydes d'azote, couramment désigné par l'acronyme d'origine anglo-saxonne LNT pour « Lean NOₓ trap ». Un tel piège fonctionne de manière séquentielle. Pendant le fonctionnement du moteur en mélange pauvre, il stocke une certaine proportion des oxydes d'azote émis dans les gaz de combustion du moteur, sans les traiter. Quand le stock d'oxydes d'azote accumulé atteint un seuil, il faut purger ou régénérer le piège en basculant le mode de fonctionnement du moteur en mélange riche, ce qui permet de réduire le stock en molécules inoffensives sous l'action des réducteurs qui correspondent aux quantités de carburant non brûlées envoyées à l'échappement. Le capteur d'oxydes d'azote aval sert à déterminer le stock d'oxydes d'azote dans le piège qui permet de déclencher les régénérations. On calcule le stock d'oxydes d'azote comme l'intégrale temporelle du produit du débit des gaz par la différence entre la concentration en oxydes d'azote entrante, qui peut provenir par exemple d'un modèle en fonction du point de fonctionnement du moteur, et la concentration en oxydes d'azote sortante, mesurée par le capteur.

Toutefois, ces solutions présentent des inconvénients. En particulier, dans certains cas, le capteur d'oxydes d'azote peut ne pas fonctionner correctement car la vitesse d'écoulement autour du capteur est trop faible. Il en résulte une sensibilité réduite d'un tel capteur. Ceci est préjudiciable notamment pour le déclenchement de la purge du piège.

On connaît aussi d'autres capteurs de mesure de propriétés de gaz disposés dans le circuit d'échappement d'un moteur, notamment, de manière non limitative, les sondes ou capteurs à oxygène, qui sont aptes à mesurer une concentration d'oxygène dans les gaz de combustion d'un moteur et qui permettent de manière connue en soi de régler les quantités de carburant injectées dans le moteur en boucle fermée sur une cible de richesse du mélange air-carburant correspondant à la concentration en oxygène. Un problème identique de vitesse d'écoulement trop faible des gaz autour du capteur peut se produire, ayant pour effet de réduire la sensibilité du capteur et de perturber la régulation de richesse. Des capteurs avec des sensibilités améliorées sont connus par des publications: DE 10 2017 006596 A1, US 2015/0160102 A1, WO 2019/245956 A1, US 2016/0349227 A1, DE 10 2010 028631 B4, US 2005/0160840 A1 ou bien FA 3 067 396.

Le but de l'invention est de fournir une solution de mesure de propriétés de gaz, notamment de gaz d'échappement d'un moteur à combustion interne, remédiant aux inconvénients ci-dessus et améliorant les dispositifs connus de l'art antérieur. En particulier, l'invention permet de réaliser une solution de mesure de propriétés de gaz qui présente une efficacité, une sensibilité et une précision accrues.

Selon l'invention, un capteur de mesure de propriété d'un gaz, comprend un corps s'étendant suivant un axe principal, destiné à un montage perpendiculaire à une direction d'écoulement d'un gaz, le capteur comprenant au moins un déflecteur disposé à proximité du corps et entourant au moins en partie le corps, l'au moins un déflecteur étant formé par une paroi adaptée pour induire une accélération d'un écoulement d'un gaz au niveau du capteur.

Selon l'invention, le au moins un déflecteur est parallèle, ou sensiblement parallèle, à l'axe principal du capteur, et apte à un positionnement perpendiculaire à ladite direction d'écoulement d'un gaz Le au moins un déflecteur peut être apte à réduire la section d'écoulement d'un gaz au niveau du capteur pour accélérer la vitesse d'écoulement du gaz au niveau du capteur.

Le capteur peut comprendre un premier déflecteur et un deuxième déflecteur disposés de part et d'autre du corps du capteur de manière symétrique par rapport à un plan médian du capteur, ce plan médian étant destiné à être agencé parallèlement à la direction d'écoulement.

Le capteur peut comprendre un premier déflecteur et un deuxième déflecteur disposés de part et d'autre du corps du capteur de manière sensiblement alignée et parallèle selon une direction perpendiculaire à l'axe principal du corps.

Le capteur peut comprendre un premier déflecteur et un deuxième déflecteur disposés de part et d'autre du corps du capteur de manière inclinée par rapport à un plan transverse comprenant l'axe principal du capteur, apte à former un écoulement de type entonnoir pour accélérer des gaz d'échappement vers le capteur.

L'angle d'inclinaison de chaque déflecteur peut être compris entre 20 et 50 degrés, de préférence sensiblement égal à 30 degrés.

La hauteur de chaque déflecteur peut être supérieure ou égale à la hauteur du corps du capteur.

La distance entre chaque déflecteur et le corps du capteur peut être égale et/ou peut être inférieure à la largeur du corps du capteur.

La hauteur du premier déflecteur peut être égale à la hauteur du deuxième déflecteur.

Le au moins un déflecteur peut être fixé au corps du capteur pour former un ensemble se présentant en une seule pièce ou le au moins un déflecteur peut être distinct du corps du capteur, apte à être fixé de manière indépendante à proximité du corps du capteur au sein d'une conduite d'écoulement d'un gaz.

Selon l'invention, une conduite d'écoulement d'un gaz, notamment conduite de gaz d'échappement pour véhicule automobile, comprend un capteur tel que défini précédemment.

Selon l'invention, un moteur à combustion interne, notamment moteur à combustion interne de véhicule automobile, comprend un capteur tel que défini précédemment au sein d'une tubulure d'un circuit d'échappement ou une conduite telle que définie précédemment.

Selon l'invention, un véhicule automobile, comprend un moteur à combustion interne tel que défini précédemment ou une conduite telle que définie précédemment ou un capteur tel que défini précédemment.

Les dessins annexés représentent, à titre d'exemple, un mode de réalisation d'un capteur selon l'invention.
[Fig. 1] La figure 1 représente une vue de détail en coupe d'une partie d'un circuit d'échappement selon l'état de la technique, selon un plan passant par l'axe d'un capteur.
[Fig. 2] La figure 2 représente une vue partielle en coupe d'un capteur selon l'état de la technique, selon un plan passant par l'axe du capteur.
[Fig. 3] La figure 3 représente une autre vue en coupe d'un capteur selon l'état de la technique, selon un plan perpendiculaire à l'axe du capteur.
[Fig. 4a] La figure 4a représente une vue en coupe d'un capteur selon un mode de réalisation de l'invention, selon un plan passant par l'axe principal du capteur.
[Fig. 4b] La figure 4b est vue de dessous du capteur selon ce mode de réalisation de l'invention.
[Fig. 5a] La figure 5a représente une vue en coupe d'un capteur selon un exemple selon un plan passant par l'axe principal du capteur.
[Fig. 5b] La figure 5b est vue de dessous du capteur selon cet exemple.

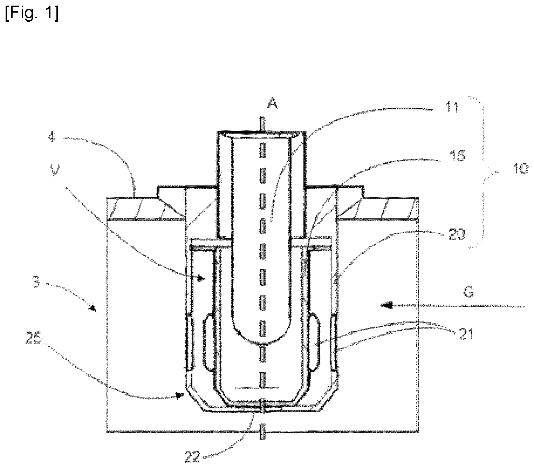

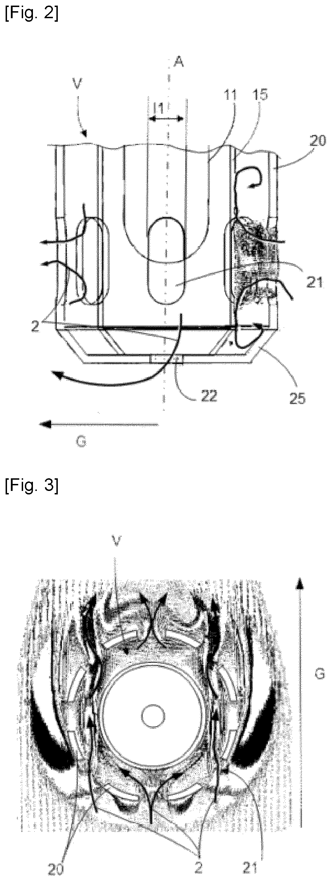

Un mode de réalisation d'un capteur, ou sonde, 10 est décrit ci-après en référence aux figures 1 à 3. Le capteur 1 est par exemple destiné à être monté dans une conduite d'un circuit d'échappement d'un moteur à combustion interne. Le capteur 1 est par exemple un capteur d'oxydes d'azote. Il peut aussi s'agir de tout autre type de capteur d'une concentration d'une molécule donnée dans les gaz de combustion du moteur, notamment, de manière non limitative, d'une sonde à oxygène, d'un capteur d'ammoniac, etc.

Des gaz s'écoulent selon une direction d'écoulement G au sein d'une conduite ou tubulure 3 d'un circuit d'échappement du moteur. Le capteur 10 s'étend perpendiculairement, ou sensiblement perpendiculairement, à cette direction d'écoulement G des gaz, selon un axe principal A du capteur 10. Un élément sensible 11 du capteur 10 vise notamment à définir la concentration en oxydes d'azote. Cet élément sensible 11, dont la longueur suit la direction de l'axe principal A de la sonde, est cylindrique et coiffé par un capot 20, dit capot extérieur, se présentant sous la forme d'une cage externe, de type capuchon cylindrique ayant un axe confondu, ou sensiblement confondu, avec l'axe A principal du capteur 10, qu'on nommera aussi dans la suite axe A du capteur. Ce capot 20 permet de recueillir les gaz 2 du flux incident arrivant selon la direction d'écoulement G. Le capot 20 comprend une pluralité d'orifices radiaux 21 généralement de forme oblongue, de longueur orientée selon l'axe A de la sonde entre une première hauteur et une deuxième hauteur. On notera que la première hauteur et la deuxième hauteur sont mesurées à partir d'une surface extérieure 4 supérieure de la paroi de la tubulure 3 du circuit d'échappement, tout comme la hauteur totale H qui s'étend jusqu'à une extrémité inférieure 25. Les orifices radiaux 21 sont disposés sur la circonférence du capot 20, et ils présentent généralement une largeur d'orifice l1 identique. En général aussi, ils présentent une répartition angulaire régulière à la circonférence du capot 20, de sorte que, quelle que soit l'orientation angulaire avec laquelle la sonde 10 est fixée sur la tubulure 3 du circuit d'échappement, environ la moitié des orifices radiaux 21 fait face, ou partiellement face, au flux des gaz selon la direction d'écoulement G, tandis que l'autre moitié est orientée selon une direction qui est opposée au flux, ou du moins ne lui fait pas face. Les orifices radiaux 21 ont principalement un rôle d'admission des gaz 2 au sein d'un volume d'admission V compris entre l'élément sensible 11 et la paroi intérieure du capot 20. Un orifice axial 22 est disposé au niveau de l'extrémité inférieure 25 du capot 20 et a principalement un rôle d'évacuation des gaz 2. Une cage interne 15 ajourée, formant un capot interne, comprenant par exemple des ailettes, est disposée dans le volume d'admission V. Cette cage interne 15 est de type capuchon cylindrique ayant un axe confondu, ou sensiblement confondu, avec l'axe A du capteur et protège l'élément sensible 11. Ainsi, les gaz 2 d'échappement mesurés sont ceux qui traversent le capot 20 par les orifices radiaux 21 et franchissent la cage interne 15 ajourée pour parvenir au contact de l'élément sensible 11 du capteur 10.

Ainsi, le capteur 10 comprend un élément sensible 11, une cage interne ou capot interne 15 et un capot externe 20 coaxiaux ou sensiblement coaxiaux à l'axe principal A du capteur.

L'invention propose d'augmenter la vitesse du flux de gaz autour du capteur pour améliorer la sensibilité du capteur. Pour cela, l'invention propose un capteur comprenant un corps du type du capteur 10 décrit ci-dessus en relation avec les figures 1-3 et comprenant au moins un déflecteur. L'au moins un déflecteur est destiné, d'une part, à diminuer la section d'écoulement et, d'autre part, à guider le flux de gaz à travers l'espace entre le corps du capteur et l'au moins un déflecteur.

Le nombre de déflecteurs peut être un, deux, ou supérieur à deux.

L'au moins un déflecteur, disposé à proximité du corps 10 du capteur, entoure au moins en partie le corps 10 du capteur. L'au moins un déflecteur peut présenter plusieurs variantes de géométrie.

Dans la suite de la description, l'axe longitudinal x correspond à la direction d'écoulement G du ou des gaz. L'axe transversal y est perpendiculaire à l'axe longitudinal x. L'axe z correspond à l'axe principal A du corps 10 du capteur. L'axe z est par exemple un axe vertical ou sensiblement vertical. Dans la suite de la description, par « corps » 10 du capteur, on entend un capteur du type de celui décrit ci-dessus en relation avec les figures 1 à 3. Le corps 10 du capteur comprend un élément sensible 11, une cage ou capot interne 15 et un capot externe 20 coaxiaux ou sensiblement coaxiaux à l'axe principal du capteur.

Par « hauteur » du corps 10 du capteur, on entend la dimension du corps du capteur selon l'axe z ou selon l'axe principal du capteur. Par « largeur » du corps 10 du capteur, on entend la dimension du corps du capteur selon l'axe transversal y. Dans le cas d'un capteur 10 de corps cylindrique, la largeur du capteur correspond à son diamètre.

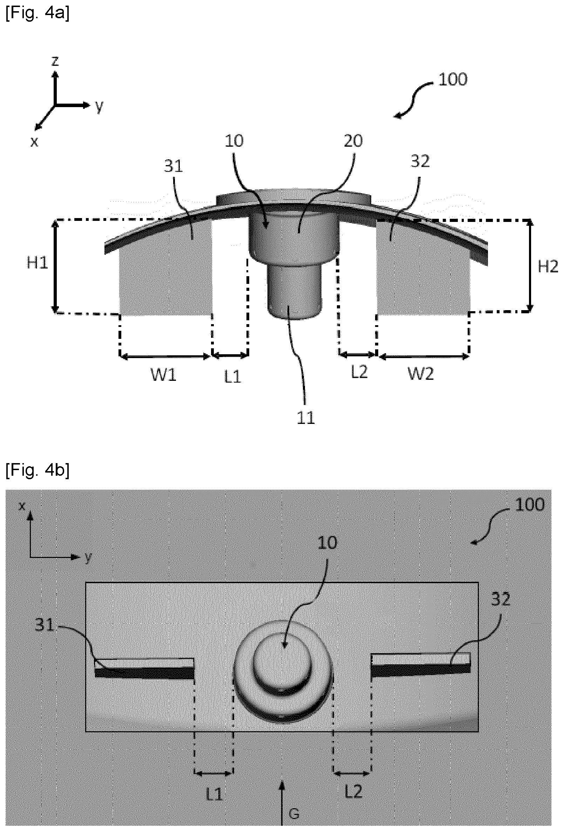

Les figures 4a et 4b illustrent un mode de réalisation d'un capteur 100. Le capteur 100 comprend le corps 10 du capteur, le corps 10 comprenant l'élément sensible 11, la cage interne 15 et le capot externe 20. Le capteur 100 comprend en outre un premier déflecteur 31 et un deuxième déflecteur 32. Les premier et deuxième déflecteurs 31, 32 sont positionnés à proximité du corps 10 du capteur. Le premier déflecteur 31 et le deuxième déflecteur 32 sont disposés de part et d'autre du corps 10 du capteur selon la direction transversale y perpendiculaire à la direction d'écoulement x.

Chaque déflecteur 31, 32 est formé par une paroi orientée parallèlement ou sensiblement parallèlement à l'axe principal z du corps 10 du capteur. Chaque déflecteur 31, 32 est formé par une paroi verticale ou sensiblement verticale. Chaque déflecteur est orienté de façon perpendiculaire à la direction d'écoulement x, selon un plan parallèle au plan (y, z). Dans ce mode de réalisation, l'angle entre chaque déflecteur 31, 32 et la direction d'écoulement x est égal à 90°.

De préférence, chaque déflecteur 31, 32 présente une surface plane.

Chaque déflecteur 31, 32 est par exemple une plaque d'épaisseur e selon la direction longitudinale x.

A titre d'exemple de dimensions, pour chaque déflecteur 31, 32, l'épaisseur e est par exemple comprise entre 2 mm et 8 mm.

Selon une variante, chaque déflecteur 31, 32 peut présenter une surface courbe.

Chaque déflecteur 31, 32 est par exemple en un matériau métallique, par exemple en un alliage à base de fer, par exemple en acier.

Par « hauteur » de chaque déflecteur 31, 32, on entend la dimension du déflecteur selon l'axe vertical z.

Avantageusement, la hauteur H1 du premier déflecteur 31 est supérieure ou égale à la hauteur du corps 10 du capteur. Avantageusement, la hauteur H2 du deuxième déflecteur 32 est supérieure ou égale à la hauteur du corps 10 du capteur.

De préférence, la hauteur H1 du premier déflecteur 31 est égale ou sensiblement égale à la hauteur H2 du deuxième déflecteur 32.

A titre d'exemple de dimensions, la hauteur du corps 10 du capteur est par exemple comprise entre 10 mm et 50 mm, et la hauteur H1 du premier déflecteur 31 et la hauteur H2 du deuxième déflecteur 32 sont par exemple comprises entre 10 mm et 50 mm. La hauteur H1 du premier déflecteur 31 et la hauteur H2 du deuxième déflecteur 32 sont par exemple égales à la hauteur du corps 10 du capteur.

Par « largeur » de chaque déflecteur 31, 32, on entend leur dimension selon l'axe transversal y.

Avantageusement, la largeur W1 du premier déflecteur 31 est égale ou sensiblement égale à la largeur W2 du deuxième déflecteur 32.

A titre d'exemple de dimensions, la largeur W1 du premier déflecteur 31 et la largeur W2 du deuxième déflecteur 32 sont par exemple comprises entre 10 mm et 40 mm, de l'ordre de grandeur de la largeur du corps 10 du capteur, de préférence sensiblement supérieures à la largeur du corps 10 du capteur.

Par largeur du corps 10 du capteur, on entend la dimension du capot externe 20 selon l'axe transversal y. Dans le cas d'un capot externe 20 cylindrique, la largeur du corps 10 du capteur correspond au diamètre du capot externe 20.

Avantageusement, la distance L1 selon l'axe transversal y entre le premier déflecteur 31 et le corps 10 du capteur est inférieure à la largeur du corps 10 du capteur. Avantageusement, la distance L2 selon l'axe transversal y entre le deuxième déflecteur 32 et le corps 10 du capteur est inférieure à la largeur du corps 10 du capteur.

De préférence, la distance L1 entre le premier déflecteur 31 et le corps 10 du capteur est égale ou sensiblement égale à la distance L2 entre le deuxième déflecteur 32 et le corps 10 du capteur.

A titre d'exemple de dimensions, la largeur du corps 10 du capteur est par exemple comprise entre 8 mm et 30 mm, et la distance L1 entre le premier déflecteur 31 et le corps 10 du capteur et la distance L2 entre le deuxième déflecteur 32 et le corps 10 du capteur sont par exemple comprises entre 5 mm et 25 mm, de préférence sensiblement inférieures à la largeur du corps 10 du capteur.

Les premier et deuxième déflecteurs 31, 32 permettent, d'une part, de diminuer la section d'écoulement des gaz et, d'autre part, de guider le flux de gaz à travers les espaces entre le corps 10 du capteur et chaque déflecteur 31, 32.

Un avantage d'un capteur 100 du type de celui décrit en relation avec les figures 4a et 4b réside dans le fait qu'il permet d'augmenter la vitesse du flux de gaz autour du corps du capteur grâce à la présence des déflecteurs. Il en résulte une sensibilité accrue du capteur.

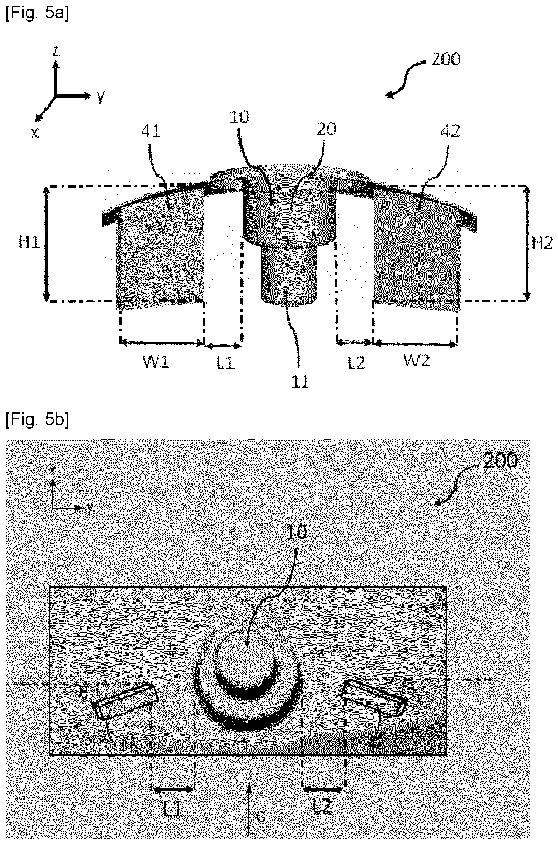

Les figures 5a et 5b illustrent un exemple de réalisation perfectionné d'un capteur 200, comprenant un corps 10 similaire à celui des figures 4a et 4b, et un premier déflecteur 41 et un deuxième déflecteur 42.

L'axe longitudinal x correspond à la direction d'écoulement G du ou des gaz.

Le capteur 200 diffère du capteur 100 des figures 4a-4b par le fait que le premier déflecteur 41 et le deuxième déflecteur 42 sont formés par des parois formant des angles respectifs Θ1 et Θ2 par rapport à la section plane du corps 10 du capteur. Ces angles sont mesurés par rapport à la direction transversale y. Le premier déflecteur 41 et le deuxième déflecteur 42 ne sont pas alignés selon l'axe transversal y comme dans le mode de réalisation des figures 4a et 4b. Les deux déflecteurs 41, 42 présentent la même inclinaison par rapport à l'axe transversal y. Ils sont symétriquement agencés autour d'un plan comprenant l'axe principal du capteur et parallèle à la direction d'écoulement. Ils forment une forme en V, comme un entonnoir accélérant l'écoulement vers une section d'écoulement plus petite au niveau du capteur, comme dans le mode de réalisation Dans les deux modes de réalisation, les deux capteurs sont agencés de manière symétrique par rapport à un plan médian du capteur, comprenant l'axe principal du capteur et parallèle à la direction d'écoulement des gaz. Naturellement, des variantes asymétriques pourraient aussi fonctionner. Avantageusement, l'angle Θ1 entre le premier déflecteur 41 et la section plane du corps 10 du capteur est compris entre 20 et 50 degrés, de préférence entre 15 et 45 degrés. Avantageusement, l'angle Θ2 entre le deuxième déflecteur 42 et la section plane du corps 10 du capteur est compris entre 20 et 50 degrés, de préférence entre 15 et 45 degrés.

De préférence, l'angle Θ1 entre le premier déflecteur 41 et la section plane du corps 10 du capteur est égal ou sensiblement égal à l'angle Θ2 entre le deuxième déflecteur 42 et la section plane du corps 10 du capteur.

Avantageusement, les angles Θ1 et Θ2 sont sensiblement égaux à 30 degrés, qui est une valeur optimale obtenue d'après les simulations numériques réalisées.

Les premier et deuxième déflecteurs 41, 42 permettent, d'une part, de diminuer la section d'écoulement des gaz et, d'autre part, de guider le flux de gaz à travers les espaces entre le corps 10 du capteur et chaque déflecteur 41, 42. Les angles Θ1 et Θ2 d'inclinaison respectifs du premier et du deuxième déflecteurs permettent un meilleur contrôle de la vitesse d'écoulement des gaz de part et d'autre du corps du capteur et ainsi de modifier la sensibilité de mesure du capteur.

Un avantage d'un capteur 200 du type de celui décrit en relation avec les figures 5a et 5b réside dans le fait qu'il permet d'augmenter la vitesse du flux de gaz autour du corps du capteur grâce à la présence des déflecteurs. Il en résulte une sensibilité accrue du capteur.

Dans un capteur du type de celui décrit ci-dessus en relation avec les figures 4a-4b et 5a-5b, grâce à la présence des déflecteurs, la vitesse d'écoulement autour du capteur est considérablement accrue. A titre d'exemple, pour une vitesse d'écoulement de gaz inférieure à 5 m/s en dehors du capteur, on obtient une vitesse d'écoulement moyenne supérieure à 7 m/s au niveau du capteur grâce aux déflecteurs agencés autour du corps du capteur, ce qui atteint la cible nominale du capteur. Le gain en vitesse d'écoulement des gaz est supérieur à 40%.

Dans un capteur du type de celui décrit ci-dessus en relation avec les figures 4a-4b et 5a-5b, grâce à la présence des déflecteurs, la précision du capteur est améliorée de manière significative par rapport à un capteur sans déflecteur.

En outre, dans un capteur du type de celui décrit ci-dessus en relation avec les figures 4a-4b et 5a-5b, grâce à la présence des déflecteurs, l'uniformité du débit de gaz à l'entrée d'un catalyseur LNT, disposé en amont du capteur, est améliorée.

Un autre avantage d'un capteur du type de celui décrit ci-dessus en relation avec les figures 4a-4b et 5a-5b réside dans un coût de fabrication réduit d'un tel capteur, ainsi que notamment d'un système de dépollution comprenant un tel capteur. L'ajout des déflecteurs ne modifie pas le procédé de fabrication du capteur, l'élément sensible 11, la cage interne 15 et le capot 20 n'étant pas modifiés. En outre, l'au moins un déflecteur étant de préférence réalisé en un matériau métallique, il en résulte de faibles coûts d'industrialisation.

Selon une variante, un premier déflecteur peut être positionné devant le capteur, ou en amont du capteur, par rapport à la direction d'écoulement des gaz, c'est-à-dire que le premier déflecteur se situe à l'emplacement de l'arrivée du flux de gaz vers le capteur 10. Un deuxième déflecteur peut être positionné derrière le capteur, ou en aval du capteur, par rapport à la direction d'écoulement des gaz, c'est-à-dire que le deuxième déflecteur se situe à l'opposé de l'arrivée du flux de gaz vers le capteur 10. Autrement dit, tout autre agencement d'au moins un déflecteur qui permet une augmentation significative d'une vitesse d'écoulement de gaz au niveau du capteur peut en variante convenir.

L'invention a été décrite sur la base d'un agencement d'au moins un déflecteur fixé au capteur, pour former un tout en une même pièce comprenant à la fois la partie fonctionnelle du capteur et l'agencement d'augmentation de la vitesse d'écoulement selon l'invention. En variante, il est possible de dissocier les deux parties du capteur, de disposer un capteur traditionnel au sein d'une conduite de gaz et de disposer au moins un déflecteur de manière indépendante à proximité dudit capteur au niveau de la conduite, pour atteindre une solution équivalente.

L'invention porte donc aussi sur une conduite pour gaz, notamment une conduite de gaz d'échappement associée à un moteur, comprenant un capteur et au moins un déflecteur, pour former un ensemble identique ou équivalent aux capteurs décrits précédemment. L'invention porte aussi sur un groupe motopropulseur équipé d'une telle conduite ou d'un tel capteur, et sur un véhicule automobile comprenant un tel groupe motopropulseur.

L'invention a été décrite ci-dessus dans le cas d'un capteur, notamment d'un capteur d'oxydes d'azote, utilisé dans le domaine automobile. Bien entendu, un capteur du type de ceux décrits ci-dessus peut également être utilisé dans d'autres domaines comme les domaines de l'aéronautique et de la marine où des capteurs d'oxydes d'azote, de dioxygène, d'ammoniac, de particules, etc. sont utilisés pour améliorer les performances des moteurs.

L'invention s'applique également à d'autres types de capteurs de mesure de propriétés de gaz qu'un capteur d'oxydes d'azote, notamment à d'autres types de capteurs d'un moteur à combustion interne de véhicule automobile. L'invention peut également être utilisée pour une sonde à oxygène, un capteur d'ammoniac, un capteur de particules, etc.

## Revendications

1. Capteur de mesure de propriété d'un gaz, comprenant un corps (10) s'étendant suivant un axe principal (z), destiné à un montage perpendiculaire, ou sensiblement perpendiculaire, à une direction d'écoulement d'un gaz (x), et le capteur comprend au moins un déflecteur (31, 32; 41, 42) disposé à proximité du corps (10) et entourant au moins en partie le corps, l'au moins un déflecteur étant formé par une paroi adaptée pour induire une accélération d'un écoulement d'un gaz au niveau du capteur, et le au moins un déflecteur est parallèle, ou sensiblement parallèle, à l'axe principal (z) du capteur, **caractérisé en ce que** le au moins un déflecteur est apte à un positionnement perpendiculaire à ladite direction d'écoulement d'un gaz.

2. Capteur selon la revendication précédente, **caractérisé en ce que** le au moins un déflecteur est apte à réduire la section d'écoulement d'un gaz au niveau du capteur pour accélérer la vitesse d'écoulement du gaz au niveau du capteur.

3. Capteur selon l'une des revendications précédentes, comprenant un premier déflecteur (31 ; 41) et un deuxième déflecteur (32; 42) disposés de part et d'autre du corps (10) du capteur de manière symétrique par rapport à un plan médian du capteur, ce plan médian étant destiné à être agencé parallèlement à la direction d'écoulement (x).

4. Capteur selon l'une des revendications précédentes, comprenant un premier déflecteur (31) et un deuxième déflecteur (32) disposés de part et d'autre du corps (10) du capteur de manière sensiblement alignée et parallèle selon une direction perpendiculaire à l'axe principal du corps (10).

5. Capteur selon l'une des revendications 1 à 3, comprenant un premier déflecteur (41) et un deuxième déflecteur (42) disposés de part et d'autre du corps (10) du capteur de manière inclinée par rapport à un plan transverse comprenant l'axe principal (z) du capteur, apte à former un écoulement de type entonnoir pour accélérer des gaz d'échappement vers le capteur.

6. Capteur selon la revendication précédente, dans lequel l'angle (θ1, Θ2) d'inclinaison de chaque déflecteur (41, 42) est compris entre 20 et 50 degrés, de préférence sensiblement égal à 30 degrés.

7. Capteur selon l'une des revendications précédentes, dans lequel la hauteur (H1, H2) de chaque déflecteur (31, 32; 41, 42) est supérieure ou égale à la hauteur du corps (10) du capteur.

8. Capteur selon l'une quelconque des revendications précédentes, dans lequel la distance (L1, L2) entre chaque déflecteur (31, 32 ; 41, 42) et le corps (10) du capteur est égale et/ou est inférieure à la largeur du corps du capteur.

9. Capteur selon l'une quelconque des revendications précédentes, dans lequel la hauteur (H1) du premier déflecteur (31 ; 41) est égale à la hauteur (H2) du deuxième déflecteur (32 ; 42).

10. Capteur selon l'une quelconque des revendications précédentes, **caractérisé en ce que** le au moins un déflecteur est fixé au corps (10) du capteur pour former un ensemble se présentant en une seule pièce ou **en ce que** le au moins un déflecteur est distinct du corps (10) du capteur, apte à être fixé de manière indépendante à proximité du corps du capteur au sein d'une conduite d'écoulement d'un gaz.

11. Conduite (3) d'écoulement d'un gaz, notamment conduite de gaz d'échappement pour véhicule automobile, **caractérisée en ce qu'**elle comprend un capteur selon l'une des revendications précédentes.

12. Moteur à combustion interne, notamment moteur à combustion interne de véhicule automobile, **caractérisé en ce qu'**il comprend un capteur selon l'une des revendications 1 à 10 au sein d'une tubulure d'un circuit d'échappement ou une conduite selon la revendication précédente.

13. Véhicule automobile, **caractérisé en ce qu'**il comprend un moteur à combustion interne selon la revendication précédente ou une conduite selon la revendication 11 ou un capteur selon l'une des revendications 1 à 10.

## Patentansprüche

1. Sensor zum Messen der Eigenschaft eines Gases, umfassend einen Körper (10), der sich entlang einer Hauptachse (z) erstreckt und dazu bestimmt ist, senkrecht oder im Wesentlichen senkrecht zu einer Gasströmungsrichtung (x) montiert zu sein, wobei der Sensor mindestens einen Deflektor (31, 32; 41, 42) umfasst, der in der Nähe des Körpers (10) angeordnet ist und den Körper zumindest teilweise umgibt, wobei der mindestens eine Deflektor durch eine Wand gebildet ist, die dazu geeignet ist, eine Beschleunigung einer Gasströmung im Bereich des Sensors zu bewirken, und wobei der mindestens eine Deflektor parallel oder im Wesentlichen parallel zur Hauptachse (z) des Sensors verläuft, **dadurch gekennzeichnet, dass** der mindestens eine Deflektor dazu geeignet ist, senkrecht zur Gasströmungsrichtung positioniert zu sein.

2. Sensor nach dem vorangehenden Anspruch, **dadurch gekennzeichnet, dass** der mindestens eine Deflektor dazu geeignet ist, den Strömungsquerschnitt eines Gases im Bereich des Sensors zu verringern, um die Strömungsgeschwindigkeit des Gases im Bereich des Sensors zu erhöhen.

3. Sensor nach einem der vorangehenden Ansprüche, umfassend einen ersten Deflektor (31; 41) und einen zweiten Deflektor (32; 42), die auf beiden Seiten des Sensorkörpers (10) symmetrisch zu einer Mittelebene des Sensors angeordnet sind, wobei die Mittelebene dazu bestimmt ist, parallel zur Strömungsrichtung (x) angeordnet zu sein.

4. Sensor nach einem der vorangehenden Ansprüche, umfassend einen ersten Deflektor (31) und einen zweiten Deflektor (32), die auf beiden Seiten des Sensorkörpers (10) im Wesentlichen fluchtend und parallel in einer zur Hauptachse des Körpers (10) senkrechten Richtung angeordnet sind.

5. Sensor nach einem der Ansprüche 1 bis 3, umfassend einen ersten Deflektor (41) und einen zweiten Deflektor (42), die auf beiden Seiten des Sensorkörpers (10) in Bezug auf eine zur Hauptachse (z) des Sensors quer verlaufende Ebene geneigt angeordnet und dazu geeignet sind, einen trichterartigen Strömungsweg zu bilden, um Abgase zum Sensor zu beschleunigen.

6. Sensor nach dem vorangehenden Anspruch, wobei der Neigungswinkel (θ1, θ2) jedes Deflektors (41, 42) zwischen 20 und 50 Grad, vorzugsweise im Wesentlichen 30 Grad, beträgt.

7. Sensor nach einem der vorangehenden Ansprüche, wobei die Höhe (H1, H2) jedes Deflektors (31, 32; 41, 42) so groß wie oder größer als die Höhe des Sensorkörpers (10) ist.

8. Sensor nach einem der vorangehenden Ansprüche, wobei der Abstand (L1, L2) zwischen jedem Deflektor (31, 32; 41, 42) und dem Sensorkörper (10) so groß wie und/oder kleiner als die Breite des Sensorkörpers ist.

9. Sensor nach einem der vorangehenden Ansprüche, wobei die Höhe (H1) des ersten Deflektors (31; 41) gleich der Höhe (H2) des zweiten Deflektors (32; 42) ist.

10. Sensor nach einem der vorangehenden Ansprüche, **dadurch gekennzeichnet, dass** der mindestens eine Deflektor am Sensorkörper (10) befestigt ist, um eine Baugruppe zu bilden, die einstückig vorliegt, oder dass der mindestens eine Deflektor vom Sensorkörper (10) getrennt und dazu geeignet ist, in unabhängiger Weise in der Nähe des Sensorkörpers innerhalb einer Gasströmungsleitung befestigt zu sein.

11. Gasströmungsleitung (3), insbesondere Abgasleitung für ein Kraftfahrzeug, **dadurch gekennzeichnet, dass** sie einen Sensor nach einem der vorangehenden Ansprüche umfasst.

12. Verbrennungsmotor, insbesondere Verbrennungsmotor eines Kraftfahrzeugs, **dadurch gekennzeichnet, dass** er einen Sensor nach einem der Ansprüche 1 bis 10 innerhalb eines Stutzens einer Abgasanlage oder einer Leitung nach dem vorangehenden Anspruch umfasst.

13. Kraftfahrzeug, **dadurch gekennzeichnet, dass** es einen Verbrennungsmotor nach dem vorangehenden Anspruch oder eine Leitung nach Anspruch 11 oder einen Sensor nach einem der Ansprüche 1 bis 10 umfasst.

## Claims

1. Sensor for measuring a property of a gas, comprising a body (10) extending along a main axis (z), intended to be mounted perpendicular, or substantially perpendicular, to a direction of flow of a gas (x), and the sensor comprises at least one deflector (31, 32; 41, 42) arranged in the vicinity of the body (10) and at least partially surrounding the body, the at least one deflector being formed by a wall designed to cause a flow of a gas to accelerate at the sensor, and the at least one deflector is parallel, or substantially parallel, to the main axis (z) of the sensor, **characterized in that** the at least one deflector is able to be positioned perpendicular to said direction of flow of a gas.

2. Sensor according to the preceding claim, **characterized in that** the at least one deflector is able to reduce the flow cross section of a gas at the sensor in order to accelerate the flow velocity of the gas at the sensor.

3. Sensor according to either of the preceding claims, comprising a first deflector (31; 41) and a second deflector (32; 42) arranged on either side of the body (10) of the sensor so as to be symmetrical with respect to a median plane of the sensor, this median plane being intended to be arranged parallel to the direction of flow (x).

4. Sensor according to one of the preceding claims, comprising a first deflector (31) and a second deflector (32) arranged on either side of the body (10) of the sensor so as to be substantially aligned and parallel in a direction perpendicular to the main axis of the body (10).

5. Sensor according to one of Claims 1 to 3, comprising a first deflector (41) and a second deflector (42) arranged on either side of the body (10) of the sensor so as to be inclined with respect to a transverse plane comprising the main axis (z) of the sensor, and able to form a funnel-like flow in order to accelerate exhaust gases towards the sensor.

6. Sensor according to the preceding claim, wherein the angle (θ1, θ2) of inclination of each deflector (41, 42) is between 20 and 50 degrees, preferably substantially equal to 30 degrees.

7. Sensor according to one of the preceding claims, wherein the height (H1, H2) of each deflector (31, 32; 41, 42) is greater than or equal to the height of the body (10) of the sensor.

8. Sensor according to any one of the preceding claims, wherein the distance (L1, L2) between each deflector (31, 32; 41, 42) and the body (10) of the sensor is equal and/or is less than the width of the body of the sensor.

9. Sensor according to any one of the preceding claims, wherein the height (H1) of the first deflector (31; 41) is equal to the height (H2) of the second deflector (32; 42).

10. Sensor according to any one of the preceding claims, **characterized in that** the at least one deflector is attached to the body (10) of the sensor in order to form a one-piece assembly or **in that** the at least one deflector is separate from the body (10) of the sensor and able to be independently attached in the vicinity of the body of the sensor within a pipe for the flow of a gas.

11. Pipe (3) for the flow of a gas, in particular exhaust gas pipe for a motor vehicle, **characterized in that** it comprises a sensor according to one of the preceding claims.

12. Internal combustion engine, in particular motor vehicle internal combustion engine, **characterized in that** it comprises a sensor according to one of Claims 1 to 10 within a manifold of an exhaust circuit or a pipe according to the preceding claim.

13. Motor vehicle, **characterized in that** it comprises an internal combustion engine according to the preceding claim or a pipe according to Claim 11 or a sensor according to one of Claims 1 to 10.
